# EUROPÄISCHE PATENTSCHRIFT

(11) **EP 4 476 012 B1**
(45) Veröffentlichungstag und Bekanntmachung des Hinweises auf die Patenterteilung: **26.03.2025**
(21) Anmeldenummer: 23720830.1
(22) Anmeldetag: 19.04.2023
(51) Int. Cl.: B22F 10/10, B33Y 10/00, B33Y 40/20, B33Y 80/00, H01F 1/00, B22F 5/10, B22F 7/06, B22F 10/18, H01F 3/08, B22F 3/10, B22F 10/64, B22F 12/53, B22F 12/55, H01F 3/02, H01F 41/02, H02K 15/02, H01F 3/10, H02K 1/02, H02K 1/2781, H02K 15/00

(54) **ADDITIV HERGESTELLTES MAGNETBLECH, VERFAHREN ZUR HERSTELLUNG EINES MAGNETBLECHS, BLECHPAKET UND ELEKTRISCHE MASCHINE**
MAGNETIC SHEET CREATED THROUGH ADDITIVE MANUFACTURE, LAMINATED CORE AND ELECTRIC MACHINE
TÔLE MAGNÉTIQUE FABRIQUÉE DE MANIÈRE ADDITIVE, PAQUET DE TÔLE ET MACHINE ÉLECTRIQUE

(30) Priorität: 27.04.2022 EP 22170312
(43) Veröffentlichungstag der Anmeldung: 18.12.2024
(73) Patentinhaber: Siemens Aktiengesellschaft, 80333 München (DE)
(72) Erfinder: SCHUH, Carsten, 85598 Baldham (DE); VOLLMER, Rolf, 36129 Gersfeld (DE)
(74) Vertreter: Siemens Patent Attorneys
(86) Internationale Anmeldenummer: PCT/EP2023/060084
(87) Internationale Veröffentlichungsnummer: WO 2023/208674

(56) Entgegenhaltungen:
- EP-A1- 3 231 888
- EP-A1- 3 723 249
- CN-A- 111 085 688
- US-A1- 2015 318 096
- US-A1- 2020 083 788
- US-A1- 2022 097 135

## Beschreibung

Die Erfindung betrifft ein additiv hergestelltes Magnetblech nach dem Patentanspruch 1, ein Verfahren zur Herstellung eines Magnetblechs nach Patentanspruch 11, ein Blechpaket nach Patentanspruch 14 sowie eine elektrische Maschine nach Patentanspruch 15.

Ein neues Verfahren zur Herstellung von Magnetblechen für elektrische Maschinen stellt der Sieb- oder der Schablonendruck dar. Hierbei wird mittels einer Schablone, bei der die offenen Bereiche auc09 h mit einem Sieb versehen sein können, eine Druckpaste auf ein Substrat gedruckt. Man spricht hierbei von Schablonendruck oder Siebdruck, wobei der Schablonendruck ein Oberbegriff des Siebdrucks ist. Die Druckpaste enthält neben Lösungsmitteln und / oder Bindemitteln Metallpulver, die funktional im späteren Bauteil wirken. Durch die Siebdrucktechnik wird ein Grünkörper hergestellt, der nach einer weiteren thermischen Behandlung zunächst in der Regel entbindert wird und anschließend bei einer höheren Temperatur einem Sinterprozess zugeführt wird, wobei die metallischen Pulverkörner so miteinander versintern, dass ein strukturiertes Blech, das Magnetblech, entsteht.

Zur Erzielung einer höheren mechanischen Festigkeit solcher Bleche, insbesondere bei hohen Drehzahlen von Rotoren elektrischer Maschinen, gewinnt nun die Herstellbarkeit von Zweikomponenten-Magnetblechen immer mehr an Bedeutung. Ein Beispiel hierfür ist in der EP 3723249 A1 beschrieben. Ein grundsätzliches Problem bei derartigen Zweikomponenten-Magnetblechen, die im Schablonendruckverfahren hergestellt werden, besteht darin, dass die unterschiedlichen Materialien, wenn sie einerseits gute magnetische Eigenschaften haben und auf der anderen Seite eine hohe Festigkeit aufweisen, in der Regel unterschiedliche thermische Ausdehnungskoeffizienten aufweisen. So hat beispielsweise ein hochfester Stahl, der zur mechanischen Festigkeit des Magnetblechs eine Teilkomponente darstellt, einen Ausdehnungskoeffizienten von 16 x 10⁻⁶ K⁻¹. Ein weiterer weichmagnetischer Werkstoff hat dabei in einer Temperaturspanne zwischen 0 und 100° C einen thermischen Ausdehnungskoeffizienten, der zwischen 10 - 12 x 10⁻⁶ K⁻¹ liegt. Bei der gemeinsamen Sinterung derartig unterschiedlicher Materialkomponenten bzw. Materialpaarungen in einem Grünkörper zu einem Magnetblech kommt es insbesondere bei der Abkühlung von den Sintertemperaturen zur Raumtemperatur aufgrund dieser unterschiedlichen thermischen Ausdehnungskoeffizienten zur Ausbildung von hohen mechanischen Spannungen in den Verbindungs- bzw. Nahtbereichen zwischen diesen Materialkomponenten. Dies kann zu Verwölbungen oder zu Rissen oder insgesamt zu mechanischen Spannungen im Magnetblech führen, die die mechanischen oder magnetischen Eigenschaften deutlich verschlechtern können.

Die Aufgabe der Erfindung besteht darin, ein Magnetblech sowie ein Verfahren zur Herstellung eines Magnetbleches bereitzustellen, sowie daraus ein Blechpaket und eine elektrische Maschine zu generieren, bei denen das Magnetblech gegenüber dem Stand der Technik bei Anwendung von mindestens zwei Materialkomponenten innerhalb des Magnetblechs eine höhere Festigkeit sowie weniger intrinsische Spannungen aufweist.

Die Lösung der Aufgabe besteht in einem Magnetblech mit den Merkmalen des Anspruchs 1, in einem Verfahren zur Herstellung eines Magnetblechs mit den Merkmalen des Patentanspruchs 11, in einem Blechpaket mit den Merkmalen des Patentanspruchs 14 sowie in einer elektrischen Maschine mit den Merkmalen des Patentanspruchs 15.

Das additiv hergestellte Magnetblech für ein Blechpaket einer elektrischen Maschine nach Patentanspruch 1 umfasst mindestens drei durch Sinterung verbundene Schichten, wobei jede Schicht mindestens zwei in planarer Ausdehnung voneinander getrennte Materialkomponenten aufweist. Die Erfindung zeichnet sich dadurch aus, dass die Anordnung der Materialkomponenten in ihrer planaren Erstreckung in einer jeweiligen Schicht symmetrisch zu einer Mittelebene des Magnetblechs ist, wobei sich ein Verhältnis von Materialanteilen der ersten Materialkomponente und der zweiten Materialkomponente über die Schichtabfolge verändert. Dabei ist die erste Materialkomponente in einem radial inneren Bereich der jeweiligen Schicht angeordnet und die zweite Materialkomponente in einem radial außen liegenden Bereich einer jeweiligen Schicht angeordnet. Die erste Materialkomponente umfasst dabei eine Eisenlegierung, die zu mindestens 25 Vol. % im Magnetblech ein austenitisches Gefüge aufweist.

Der Vorteil des beschriebenen Magnetblechs gegenüber dem Stand der Technik besteht darin, dass das Magnetblech an sich aus mehreren variierenden Schichten als Laminat aufgebaut ist, wobei jedoch die Schichten durch eine Sinterverbindung fest miteinander verbunden sind und die Materialanteile der Materialkomponenten in jeder Schicht variieren. Dadurch können Spannungen, die durch unterschiedliche thermische Ausdehnungskoeffizienten der einzelnen Materialkomponenten entstehen, kompensiert werden.

Das so erzeugte Magnetblech weist eine höhere mechanische Stabilität auch deshalb auf, da die Materialkomponente, die radial innen liegt, ein austenitisches Gefüge aufweist und somit eine höhere mechanische Festigkeit in sich trägt. Für die Reduktion der auftretenden Spannungen aufgrund der unterschiedlichen Ausdehnungskoeffizienten ist es auch von Bedeutung, dass die einzelnen Schichten mit einer Symmetrie versehen sind. So wird bezüglich des Bleches in der Blechebene eine Symmetrieebene aufgespannt, die genau auf der halben Höhe des Magnetbleches verläuft. Der Materialanteil der einzelnen Materialkomponenten oberhalb und unterhalb der Symmetrieebene ist dabei gleich. Dies dient vor allem dazu, dass sich aufgrund der Ausdehnungskoeffizienten nicht nur die Spannungen abbauen, sondern das Magnetblech auch zu weniger Wölbungen neigt.

In einer weiteren Ausgestaltungsform der Erfindung ist die zweite Materialkomponente eine Eisenlegierung, die mindestens 95 Gew.-%, insbesondere mindestens 97 Gew.-% und ganz besonders bevorzugt mindestens 99 Gew.-% Eisen aufweist. Im Idealfall handelt es sich dabei um Reineisen, da Reineisen die beste ferritische Gefügestruktur oder martensitische Gefügestruktur aufweist und dabei sehr gute weichmagnetische Eigenschaften umfasst, die für die jeweilige Ummagnetisierung bei einer elektrischen Maschine vorteilhaft sind.

Die erste Materialkomponente im radial inneren Bereich des Magnetbleches sollte dabei bevorzugt so ausgestaltet sein, dass sie eine möglichst hohe Festigkeit aufweist und der mechanischen Belastung, die auf das Magnetblech wirkt, standhält. Hierfür ist insbesondere eine Chrom-Nickel-Legierung als Ausgangsmaterial für die erste Materialkomponente zweckmäßig. Diese Chrom-Nickel-Legierung weist dabei bevorzugt einen Chromanteil auf, der zwischen 22 Gew.-% und 28 Gew.-%, insbesondere zwischen 24 Gew.-% und 26 Gew.-% beträgt.

Der Nickelanteil liegt dabei in einer zweckmäßigen Ausgestaltungsform der Erfindung zwischen 4 Gew.-% und 10 Gew.-%, insbesondere zwischen 6 Gew.-% und 8 Gew.-%, wobei die Eckwerte jeweils in dem angegebenen Bereich mit einbezogen sind.

In einer weiteren vorteilhaften Ausgestaltungsform der Erfindung ist bei mindestens einer Schicht ein Übergangsbereich vorgesehen, der zwischen dem radialen inneren Bereich und dem radialen äußeren Bereich angeordnet ist. In dem Übergangsbereich ist sowohl die erste Materialkomponente als auch die zweite Materialkomponente in diskreten Teilbereichen vorliegend. Unter diskreten Teilbereichen wird dabei verstanden, dass es sich nicht um eine Mischung der einzelnen Materialkomponenten in dem Übergangsbereich handelt, sondern dass in dem Übergangsbereich abschnittsweise Bereiche mit der ersten Materialkomponente und der zweiten Materialkomponente getrennt voneinander, also diskret vorliegen.

Dabei können die einzelnen Materialkomponenten in dem Übergangsbereich sowohl zusammenhängend an dem inneren oder äußeren Bereich angeordnet sein oder als Inseln innerhalb der jeweiligen anderen Materialkomponente vorliegen. Der Übergangsbereich mit den jeweils beschriebenen diskreten Teilbereichen der einzelnen Materialkomponenten ist besonders gut dazu geeignet, die unterschiedlichen thermischen Ausdehnungskoeffizienten aneinander anzupassen. Bei den beschriebenen kleineren diskreten Teilbereichen ist die absolute Ausdehnung beim Erwärmen im Betrieb oder auch bei der Sinterschwindung für sich genommen kleiner als bei größeren Bereichen. Durch Berechnung beispielsweise mit finiten Elementen kann eine geeignete Struktur der diskreten Teilbereiche im Übergangsbereich ermittelt werden und somit die Spannungen innerhalb des Magnetbleches auch noch durch Anwendung der beschriebenen finiten Elementemethode minimiert werden.

Bei Anwendung dieses Übergangsbereiches ist es jedoch zweckmäßig, dass eine obere Deckschicht des Magnetblechs und eine untere Deckschicht des Magnetblechs so ausgestaltet sind, dass sie keinen Übergangsbereich aufweisen und nur vom radial inneren Bereich und vom radial äußeren Bereich gebildet werden. Dies bietet den Vorteil, dass für den Übergangsbereich der innen liegenden Schichten eine magnetische Abschirmung gewährleistet ist, sodass magnetische Bereiche im an sich unmagnetischen radial inneren Bereich nicht zu Wirbelstromverlusten führen.

Zur besseren Anpassung der thermischen Ausdehnungskoeffizienten innerhalb des Magnetbleches kann es auch zweckmäßig sein, dass die einzelnen Schichten unterschiedliche Schichtdicken aufweisen. Die Schichtdicken der einzelnen Schichten können dabei je nach Anzahl der Schichten, die jeweils ein Magnetblech bilden, was üblicherweise in vorteilhafter Weise zwischen drei Schichten und neun Schichten sind, Schichtdicken aufweisen, die zwischen 10 µm und 80 µm betragen, insbesondere zwischen 20 µm und 50 µm betragen.

Ein weiterer Bestandteil der Erfindung besteht in einem Verfahren zur Herstellung eines rotationssymmetrischen Magnetblechs für ein Blechpaket einer elektrischen Maschine und umfasst dabei folgende Schritte:
a) Aufbringen einer ersten Druckpaste mittels eines Schablonendruckverfahrens auf ein Substrat zur Ausbildung eines ersten Bereichs einer ersten Schicht,
b) Aufbringen eines zweiten Bereichs der ersten Schicht auf das Substrat unter Verwendung einer zweiten Druckpaste, sodass in der Schicht ein radial innenliegender Druckbereich und ein radial außenliegender Druckbereich ausgebildet werden,
c) Wiederholen der Schritte a) - c), sodass mindestens drei Schichten entstehen, die einen Grünkörper des Magnetblechs bilden, wobei
d) die erste Druckpaste und die zweite Druckpaste unterschiedliche funktionale Material-Vorkomponenten umfassen und die funktionalen Material-Vorkomponenten beider Druckpasten Eisenpartikel in unterschiedlichen Legierungszusammensetzungen umfassen und
e) die Anordnung der Druckbereiche in den einzelnen Schritten so ausgestaltet ist, dass sich eine Symmetrie der Bereiche bezüglich einer Mittelebene, die parallel zum Substrat durch die Mitte des Grünkörpers verläuft, ergibt und die Materialanteile der Druckpaste zwischen den einzelnen Schichten variieren,
f) Durchführen eines Sinterprozesses des Grünkörpers zur Ausbildung des Magnetbleches, sodass radial innenliegende Druckbereiche des Grünkörpers zu einer Materialkomponente auf Eisenbasis im Magnetblech umgewandelt werden, die zumindest teilweise ein austenitisches Gefüge aufweisen.

In der Regel ist es zweckmäßig aber nicht in allen Fällen erforderlich und abhängig von der Viskosität und Feuchtegehalt der Druckpaste, zwischen den Schritten b) und c) einen Trocknungsschritt einzufügen.

Das beschriebene Verfahren bzw. das daraus hergestellte Magnetblech weist dieselben vorteilhaften Eigenschaften auf, die bereits bezüglich des Magnetblechs nach Anspruch 1 beschrieben sind. Zur Analyse von Phasenanteilen, insbesondere zur Bestimmung eines austenitischen Gefügeanteils, wird ein planarer Schliff durch das Material angefertigt und mit einem Auflichtmikroskop über eine Bildbearbeitungssoftware ausgewertet. Für die Bildverarbeitung kann beispielsweise sowohl ein Mikroskop der Firma Zeiss als auch die hierzu vorhandene Software ZEN angewendet werden. Ein vorteilhafter Gefügeanteil von austenitischem Gefüge wird dabei von mindestens 25 Vol.-% gesehen. Bei Gefügeanteilen werden aufgrund der Auswertung über einen planaren Schliff und einem zweidimensionalen Bild Volumenanteile als Messgröße verwendet. Bei der Angabe von Legierungsbestandteilen werden Gew.-% verwendet, da hier die Beimischung der einzelnen Komponenten in Gewichtsanteilen vorteilhaft messbar ist.

In einer weiteren vorteilhaften Ausgestaltungsform des Verfahrens werden neben dem radialen innenliegenden Druckbereich und dem radial außenliegenden Druckbereich in mindestens zwei Schichten Übergangs-Druckbereiche erstellt, in denen sowohl die erste Material-Vorkomponente als auch die zweite Material-Vorkomponente in diskreten Teilbereichen vorliegen. Auch diese vorteilhafte Ausgestaltungsform ist bereits bezüglich des Magnetblechs beschrieben, hierdurch werden die Auswirkungen der unterschiedlichen Ausdehnungskoeffizienten der einzelnen Materialkomponenten noch einmal weiter reduziert.

Insbesondere bei der Darstellung von inselförmigen diskreten Teilbereichen in den Übergangs-Druckbereichen kann es verfahrenstechnisch aufwendig sein, dass eine Materialkomponente in eine bereits gedruckte Materialkomponente eingedruckt wird. In diesem Fall kann es zweckmäßig sein, ein druckfreies additives Fertigungsverfahren, insbesondere ein Sprühverfahren, für die Darstellung der zweiten Druckmaterial-Vorkomponente, insbesondere in Inselbereichen, zu verwenden.

Ein weiterer Bestandteil der Erfindung ist ein Blechpaket für einen Rotor einer elektrischen Maschine, umfassend eine Mehrzahl von Magnetblechen nach einem der Ansprüche 1 - 10 bzw. hergestellt nach einem Verfahren nach einem der Ansprüche 11 - 13. Ferner ist ein Bestandteil der Erfindung eine elektrische Maschine, die ein derartiges Blechpaket nach Anspruch 14 umfasst.

Weitere Ausgestaltungsformen der Erfindung und weitere Merkmale werden anhand der folgenden Figuren näher beschrieben. Dabei handelt es sich um rein schematische Darstellungen, die keine Einschränkung des Schutzbereichs darstellen. Bei Merkmalen, die eine unterschiedliche Ausgestaltungsform aufweisen aber dieselbe Bezeichnung tragen, wird in den einzelnen Figuren das jeweils selbe Bezugszeichen verwendet. Dabei zeigen:
Figur 1 eine schematische Explosionsdarstellung einer elektrischen Maschine, insbesondere eines Elektromotors, umfassend ein Gehäuse, einen Stator und einen Rotor, der auf einer Welle montiert ist,
Figur 2 ein typisches Blechpaket für einen Rotor einer elektrischen Maschine,
Figur 3 ein Beispiel für einen Schichtaufbau einzelner Schichten eines Magnetbleches,
Figur 4 einen Schichtaufbau eines Magnetbleches in einer alternativen Ausgestaltungsform zu Figur 3,
Figur 5 einen Schichtaufbau eines Magnetbleches mit einer alternativen Ausgestaltungsform zu Figur 3 und 4,
Figur 6 eine Draufsicht auf ein Magnetblech bzw. einen Schnitt durch ein Magnetblech mit drei Bereichen der Materialkomponenten,
Figur 7 einen Schnitt durch ein Magnetblech wie in Figur 6 mit alternativer Ausgestaltungsform,
Figur 8 einen Verfahrensablauf zur Herstellung eines Magnetblechs.

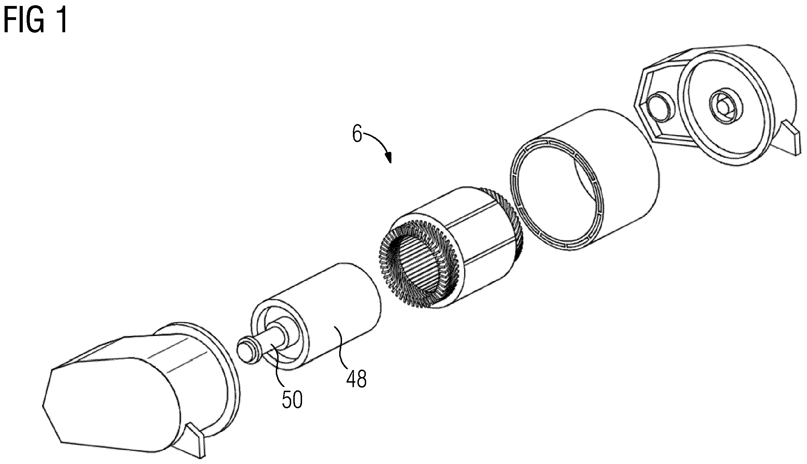

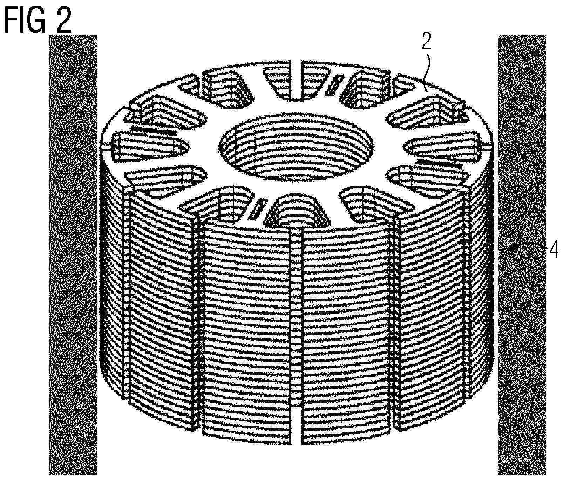

In Figur 1 ist eine Explosionsdarstellung einer elektrischen Maschine 6, hier in Form eines Elektromotors, beispielsweise für ein Elektrofahrzeug, dargestellt. Auf die einzelnen Komponenten der elektrischen Maschine 6 soll an dieser Stelle nicht weiter eingegangen werden. Bezeichnet wird jedoch ein Rotor 48, der auf einer Welle 50 montiert ist. Der Rotor 48 umfasst dabei ein Blechpaket 4, das in Figur 2 näher und detaillierter dargestellt ist, wobei das Blechpaket 4 aus einzelnen Magnetblechen 2 gestapelt zusammengesetzt ist. Bei der Einbaulage in den Rotor 48 ist das Blechpaket 4 durch hier nicht dargestellte Wicklungen umgeben.

In Figur 2 ist zu erkennen, dass es sich bei den Magnetblechen 2 um strukturierte planare Gebilde handelt, wobei unter dem Begriff "planar" zu verstehen ist, dass es sich um eine ebene Erstreckung handelt, wobei die Erstreckung des Magnetblechs in Blechebene sehr viel größer ist als eine Höhe 64 des Magnetblechs 2. Die flächige Erstreckung, also der Durchmesser des Magnetblechs 2, ist dabei bevorzugt mindestens fünf Mal größer als die Höhe 64.

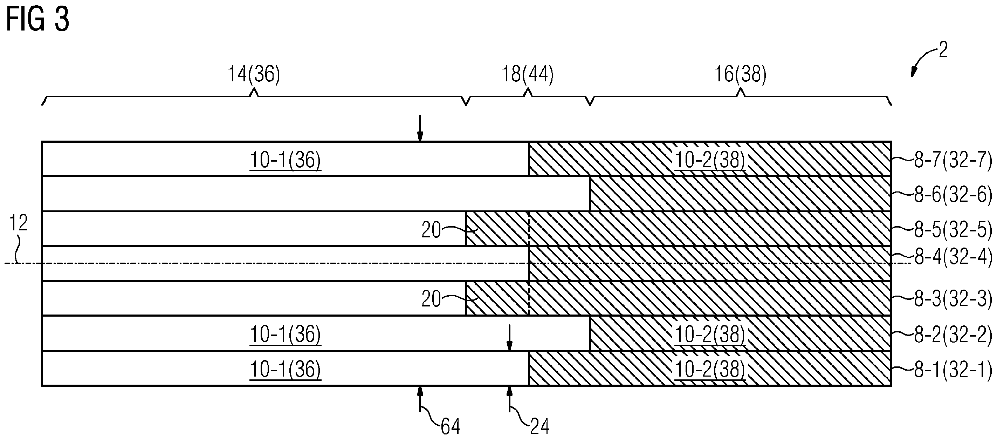

In Figur 3 ist eine schematische Darstellung durch einen Schnitt eines Magnetblechs 2 dargestellt. Dabei ist nur eine Seite des rotationssymmetrischen Magnetblechs 2 abgebildet.

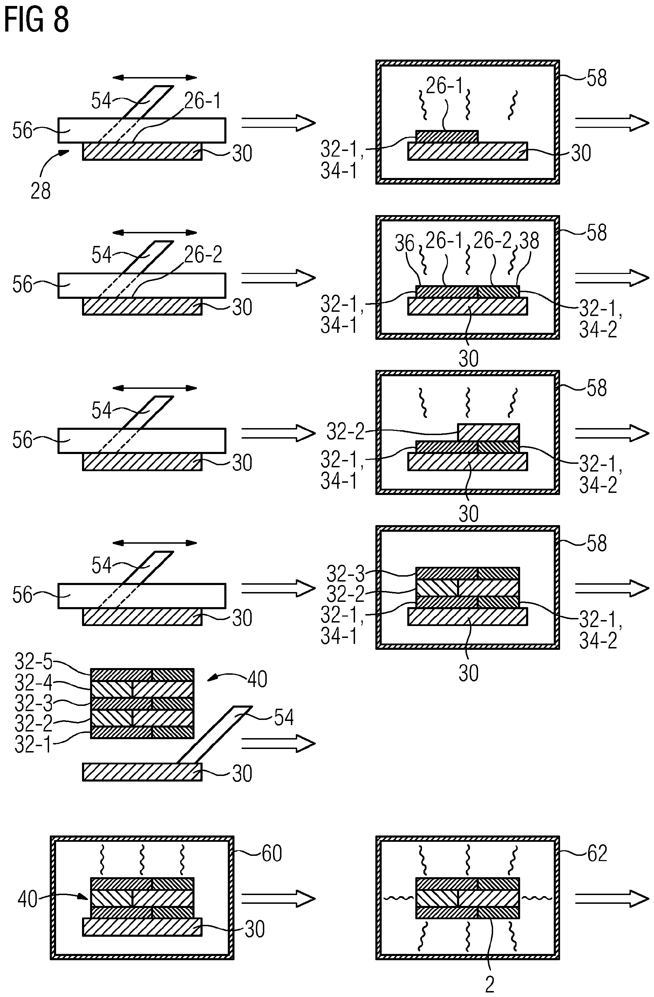

Im Weiteren wird sowohl auf das fertiggestellte Magnetblech 2, wie es beispielsweise in Figur 2 dargestellt ist, eingegangen als auch auf das Herstellungsverfahren des Magnetbleches 2, das in Figur 8 veranschaulicht ist. Die charakteristischen Merkmale des Magnetblechs 2, insbesondere der schichtweise Aufbau und die dazu angewandten Materialkomponenten, werden in den Figuren 3 - 7 näher erläutert. Bei den Figuren 3 - 7 wird von einem fertiggestellten Magnetblech 2 ausgegangen, es gibt jedoch auch während der Herstellung korrespondierende Merkmale von Schichten und einzelnen Materialkomponenten, die erst durch den Fertigungsprozess zu den endgültigen Merkmalen werden. Hierbei werden unterschiedliche Bezeichnungen verwendet. In den Figuren 3 - 5 werden die Bezeichnungen verwendet, die für das Magnetblech relevant sind und in Klammern dahinter werden die Bezugszeichen verwendet, die bei der Herstellung des Magnetblechs 2 als Vorstufen dieser endgültigen Merkmale im Grünkörper mit diesen korrespondieren. So weist das Magnetblech 2 nach Figur 3 insgesamt sieben Schichten 8-1 bis 8-7 auf. Diese Schichten 8-1 bis 8-7 korrespondieren mit Schichten während der Herstellung des Magnetblechs 2, die in Klammern mit 32-1 bis 32-7 bezeichnet sind. So weist die unterste Schicht 8-1 einen radial inneren Bereich 10-1 auf, der mit einem radial innenliegenden Druckbereich 36 während des Schablonendruckverfahrens 28 korrespondiert. Ferner weist die Schicht 8-1 eine zweite Materialkomponente 10-2 auf, die mit einem radial außenliegenden Druckbereich 38 korrespondiert. Die Schicht 8-1 weist dabei eine Dicke 24 auf, die bei ca. 30 µm liegt. Üblicherweise liegen die Schichtdicken 24 zwischen 10 µm und 80 µm.

Die zweite Schicht 8-2 weist wiederum eine erste Materialkomponente 10-1 und eine zweite Materialkomponente 10-2 auf. Dies gilt fortlaufend für die weiteren Schichte 8-3 bis 8-7. Dabei ist eine Symmetrieebene 12 definiert, die parallel zur Blechebene in der Mitte des Magnetblechs 2 verläuft. In der Mitte des Magnetblechs 2 bedeutet dabei, dass sie auf einer halben Höhe 64 des Magnetblechs 2 parallel zur Blechebene, also der Blechoberfläche oder einer Substratfläche (vgl. Figur 8), verläuft. Die Anordnung der ersten Materialkomponente 10-1 und der zweiten Materialkomponente 10-2 ist oberhalb und unterhalb der Symmetrieebene 12 symmetrisch. Ferner variieren die Anteile der ersten Materialkomponente 10-1 und 10-2 in jeder Schicht 8-1 bis 8-7. Durch diese beiden Maßnahmen, einerseits der Symmetrie entlang der Symmetrieachse 12 und der Variation in jeder Ebene 8-1 bis 8.7, werden die einzelnen thermischen Ausdehnungskoeffizienten, die die einzelnen Materialkomponenten 10-1 und 10-2 aufweisen, so aneinander angepasst, dass die insbesondere bei einer Sinterschwindung auftretenden Materialspannungen deutlich reduziert werden. Außerdem neigt das Magnetblech durch die symmetrische Anordnung der Schichten 8-1 bis 8-7 kaum zu einer Wölbung und führt zu einer höheren Planarität des Magnetblechs 2.

Ferner ist ein Übergangsbereich 18 (im Grünkörper mit dem Begriff Übergangsdruckbereich versehen) vorgesehen, in dem über das gesamte Magnetblech 2 sowohl die erste Materialkomponente 10-1 als auch die zweite Materialkomponente 10-2 auftreten. Dieser Übergangsbereich dient ebenfalls wie bereits beschrieben zur Abfederung und Minimierung der Auswirkung der unterschiedlichen Ausdehnungskoeffizienten, die die einzelnen Materialkomponenten 10-1 und 10-2 aufweisen.

Bei der Materialkomponente 10-1 handelt es sich bevorzugt, aber nicht notwendigerweise um eine Chrom-Nickel-Legierung, die beispielsweise 25 Gew.-% Chrom aufweist und dabei einen Nickelanteil von 7 Gew.-% hat. Eine derartige Legierung ist eine Edelstahllegierung mit einer sehr hohen Festigkeit. Diese Materialkomponente 10-1, die den radial inneren Bereich 14 des Magnetblechs 2 bildet, trägt insbesondere als Tragstruktur für die Festigkeit des Magnetbleches 2, insbesondere bei hohen Rotationsgeschwindigkeiten, Verantwortung. Im Gegensatz dazu ist die Materialkomponente 10-2 als magnetische Materialkomponente, insbesondere als weichmagnetische Komponente, ausgestaltet. Sie weist einen sehr hohen Eisenanteil auf, der bevorzugt über 95 Gew. %, ganz besonders bevorzugt über 99 Gew. % liegt. Ein so hoher Eisenanteil, im Idealfall Reineisen, führt zu einer ferritischen Materialstruktur, die besonders gute weichmagnetische Eigenschaften aufweist. Diese Reineisenstruktur lässt sich sehr leicht ummagnetisieren, wobei die Hystereseverluste bei der Ummagnetisierung des Materials sehr gering sind.

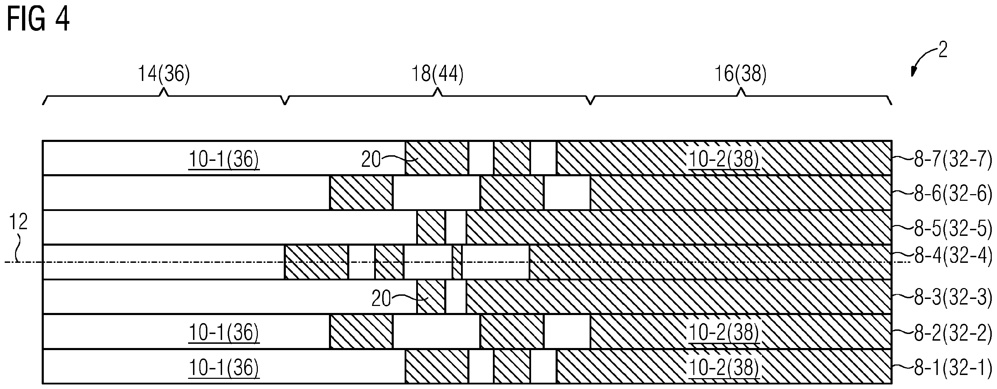

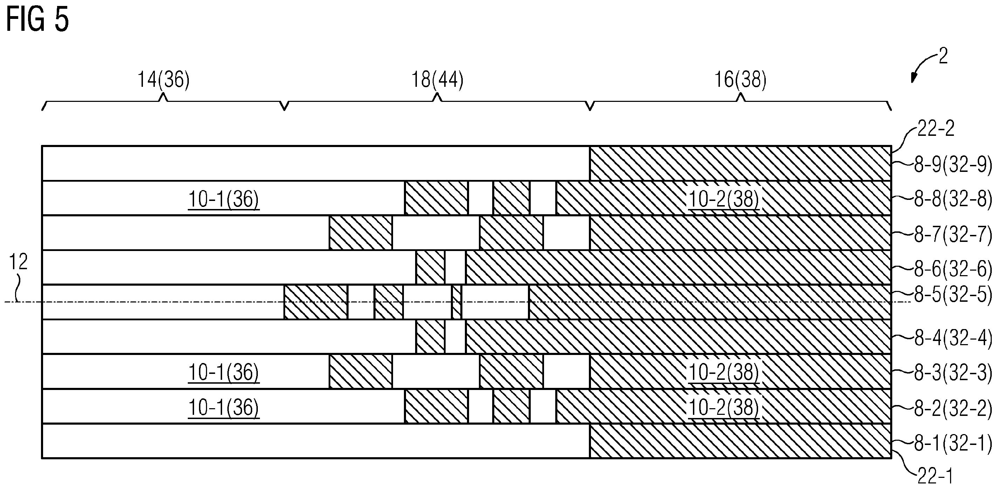

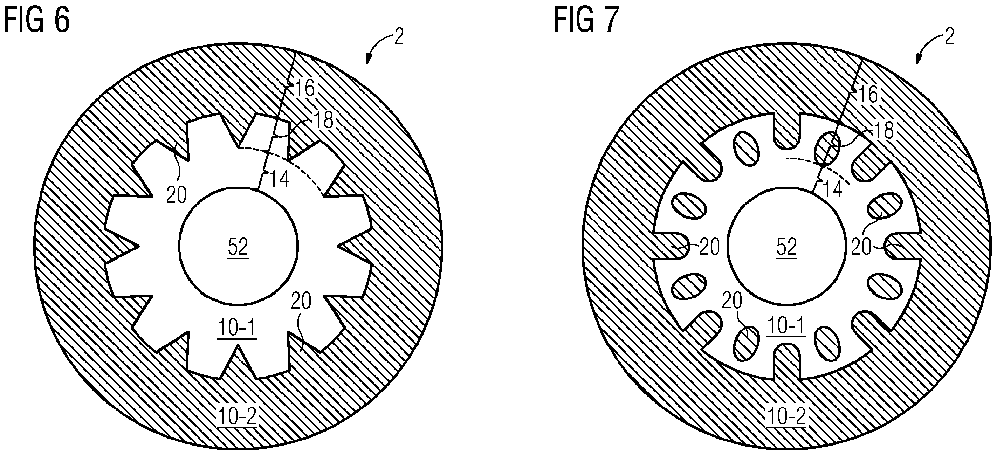

In den Figuren 4 und 5 sind alternative Ausgestaltungsformen des Magnetblechs zu der ausführlich beschriebenen Struktur des Magnetblechs 2 in Figur 3 dargestellt. Der wesentliche Unterschied der Figuren 4 und 5 gegenüber dem strukturellen Aufbau des Magnetblechs 2 nach Figur 3 besteht darin, dass der Übergangsbereich 18 breiter ausgestaltet ist als in Figur 3 und dass er mehrere inselförmige diskrete Teilbereiche 20 umfasst, wobei die zweite Materialkomponente 10-2 mit den weichmagnetischen Eigenschaften in Materialbereiche der Materialkomponente 10-1 eingebettet sind. Dies ist auch in einer anderen Darstellung in den Figuren 6 und 7, wo es sich jeweils um eine Draufsicht auf das Magnetblech 2 handelt, zu erkennen. Insbesondere in Figur 7 sind diskrete Teilbereiche 20 der Materialkomponente 10-2 in die Materialkomponente 10-1 inselförmig eingebettet. Durch diese diskreten Teilbereiche 20, die sich im Übergangsbereich 18 befinden, kann insbesondere im Übergangsbereich 18 auf die unterschiedlichen thermischen Ausdehnungskoeffizienten eingegangen werden. Bei der Konstruktion des Magnetblechs 2 kann über eine Anwendung von Finite-Elemente-Methoden eine entsprechende Verteilung der diskreten Teilbereiche 20 im Übergangsbereich 18 berechnet werden, sodass der Angleich der thermischen Ausdehnungskoeffizienten zwischen den Materialkomponenten 10-1 und 10-2 optimiert wird.

Die Darstellung des Magnetblechs 2 in Figur 5 unterscheidet sich von der Darstellung in Figur 4 insbesondere darin, dass eine untere Deckschicht 22-1 und eine obere Deckschicht 22-2 vorgesehen sind, in denen lediglich der radial innere Bereich 14 und der radial äußere Bereich 16 vorliegen, und der Übergangsbereich 18, der in den Schichten dazwischen vorliegt, also in diesem Fall den Schichten 8-2 bis 8-8, abgedeckt wird. Er wird dabei durch die erste Materialkomponente 10-1 die weichmagnetische Materialkomponente 10-2 abgedeckt, was zu einer magnetischen Abschirmung führt. Hierdurch werden Wirbelstromverluste reduziert.

Wie bereits beschrieben, liegen in den Figuren 6 und 7 Abbildungen des Magnetblechs 2 in einer Draufsicht vor, wobei insbesondere der Übergangsbereich 18 zwischen den beiden Figuren 6 und 7 variiert. Dabei weist das Magnetblech 2 eine Bohrung 52 auf, die im Mittelpunkt des Magnetblechs 2 liegt und durch die in einer Einbaulage die Welle 50 geführt ist.

In Figur 8 ist nun das Herstellungsverfahren bzw. eine Möglichkeit zur Herstellung des Magnetblechs 2 mit dem beschriebenen Schichtaufbau veranschaulicht. Hierbei handelt es sich um schematisch sehr vereinfachte Abbildungen, die lediglich die einzelnen Prozessschritte besser veranschaulichen sollen. Zunächst wird, ausgehend von links oben in Figur 8, mittels eines Schablonendruckverfahrens 28 eine erste Schicht 32-1 eines herzustellenden Grünkörpers 40 erzeugt. Dabei wird mittels einer Druckschablone 56, die in diesem Beispiel als Siebdruckschablone 56 ausgestaltet ist, mittels eines Rakels 54 eine erste Druckpaste 26-1 auf ein Substrat 30 aufgedruckt. Im rechten oberen Teil ist zu erkennen, wie die erste Druckpaste 26-1 auf dem Substrat 30 in einer Trocknungsvorrichtung 58 getrocknet wird. Bei der Trocknungsvorrichtung 58 kann es sich um einen Trockenofen handeln, beispielsweise kann dieser in Form eines rollengeführten Durchlaufofens ausgestaltet sein, es kann jedoch auch eine Kammer sein, in der durch eine Infrarotbeleuchtung eine Trocknung erfolgt.

In einem weiteren Schritt wird auf dasselbe Substrat mit einer anderen Schablone 56' eine zweite Druckpaste 26-2 aufgebracht. Beide gedruckten Druckpasten 26-1 und 26-2 bilden jeweils einen ersten Druckbereich 34-1 und einen zweiten Druckbereich 34-2. Zusammen bilden diese Druckbereiche 34-1 und 34-2 eine erste Schicht 32-1 eines Grünkörpers 40. Diese Druckbereiche 34-1 und 34-2 schließen direkt aneinander an, ohne sich dabei, abgesehen von Prozessungenauigkeiten, zu überlappen. In der rein schematischen Darstellung gemäß Figur 8 wird hier nicht auf den detaillierten Aufbau der Schichten 32-1 bis 32-7 eingegangen, wie es in den Figuren 3 bis 5 beschrieben ist. Hierbei wird lediglich von einem ersten Druckbereich 34-1 und einem zweiten Druckbereich 34-2 ausgegangen. Die radial innenliegenden Druckbereiche 36 und radial außenliegenden Druckbereiche 38 werden in dieser vereinfachten Darstellung lediglich angedeutet. Es folgen in der Figur 8 weitere analoge Abläufe, in denen mehrere Schichten 32-1 bis schließlich 32-5 mit diesem Druckverfahren übereinandergesetzt werden. Dabei kann der Trocknungsvorgang in der Trocknungsvorrichtung 58 nach jedem einzelnen Teildruck eines Bereiches 34-1 oder 34-2 erfolgen, oder nach dem doppelten Druck einer jeweiligen Schicht 32-n, beispielsweise der 32-1. Dies reduziert den Prozessaufwand, da nicht nach jedem Einzeldruck eine Trocknung erfolgen muss.

Der hier beispielsweise mit fünf Schichten 32-1 bis 32-5 dargestellte Grünkörper 40 wird nun von dem Substrat 30 entfernt und einer weiteren thermischen Behandlung zugeführt. Dabei handelt es sich zunächst um einen Entbinderungsschritt, wobei in einer Entbinderungsvorrichtung 60 insbesondere organische Bindemittel aus der Druckpaste 26-1 und 26-2 thermisch entfernt werden. Der so aufbereitete Grünkörper 40 wird in einem weiteren Verfahrensschritt in einer Sintervorrichtung 62 zu dem endgültigen Magnetblech 2 bei Temperaturen zwischen 1000 °C und 1350 °C gesintert. Bei dem Sintern werden die hier nicht dargestellten einzelnen Körner der Eisenlegierungen in den Korngrenzbereichen durch Diffusionsprozesse und in geringem Umfang durch Schmelzprozesse so miteinander verbunden, dass ein monolithisches Gefüge entsteht. Das so hergestellte Magnetblech 2 ist in den Figuren 3 - 7 beschrieben und weist die entsprechende charakteristische Schichtfolge und die sich daraus ergebenden mechanischen Vorteile auf.

### Bezugszeichenliste

- 2: Magnetblech
- 4: Blechpaket
- 6: elektrische Maschine
- 8-1 - 8-9: Schichten
- 10-1, 10-2: Materialkomponenten
- 12: Mittelebene = Symmetrieebene
- 14: radial innerer Bereich
- 16: radial äußerer Bereich
- 18: Übergangsbereich
- 20: diskrete Teilbereiche
- 22-1,2: untere, obere Deckschicht
- 24: Schichtdicke
- 26-1: erste Druckpaste
- 26-2: zweite Druckpaste
- 28: Schablonendruckverfahren
- 30: Substrat
- 32-1 - 32-9: Schichten Grünkörper
- 34-1,2: erster Druckbereich, zweiter Druckbereich
- 36: radial innenliegender Druckbereich
- 38: radial außenliegender Druckbereich
- 40: Grünkörper
- 42: Sinterprozess
- 44: Übergangsbereich
- 46: diskrete Teilbereiche Grünkörper
- 48: Rotor
- 50: Welle
- 52: Bohrung
- 54: Rakel
- 56: Druckschablone
- 58: Trocknungsvorrichtung
- 60: Entbinderungsvorrichtung
- 62: Sintervorrichtung
- 64: Höhe Magnetbleche

## Patentansprüche

1. Schablonengedrucktes rotationssymmetrisches Magnetblech (2), für ein Blechpaket (4) einer elektrischen Maschine (6), das mindestens drei durch Sinterung verbundene Schichten (8-1, 8-2, 8-3 ... 8-n) umfasst, wobei in jeder Schicht (8-1, 8-2, 8-3 ... 8-n) mindestens zwei in planarer Erstreckung voneinander getrennte Materialkomponenten (10-1), (10-2) vorliegen,
**dadurch gekennzeichnet, dass**
- die Anordnung der Materialkomponenten (10-1), (10-2) in ihrer planaren Erstreckung in einer jeweiligen Schicht (8-1, 8-2, 8-3 ... 8-n) symmetrisch zu einer Mittelebene (12) des Magnetblechs (2) ist, wobei
- sich ein Verhältnis von Materialanteilen der ersten Materialkomponente und der zweiten Materialkomponente über die Schichtabfolge verändert und
- die erste Materialkomponente (10-1) in einem radial inneren Bereich (14) der jeweiligen Schicht (8-1, 8-2, 8-3 ... 8-n) angeordnet ist und die zweite Materialkomponente (10-2) in einem radial äußeren Bereich (16) einer jeweiligen Schicht (8-1, 8-2, 8-3 ... 8-n) angeordnet ist und
- die erste Materialkomponente (10-1) eine Eisenlegierung umfasst, die zu mindestens 25 Vol. % ein austenitisches Gefüge aufweist.

2. Magnetblech nach Anspruch 1, **dadurch gekennzeichnet, dass** die zweite Materialkomponente (10-2) eine Eisenlegierung umfasst, die mindestens 95 Gew. %, insbesondere mindestens 97 Gew. % Eisen umfasst.

3. Magnetblech nach Anspruch 2, **dadurch gekennzeichnet, dass** die zweite Materialkomponente (10-2) eine ferritische oder martensitische Gefügestruktur aufweist.

4. Magnetblech nach einem der Ansprüche 1 bis 3, **dadurch gekennzeichnet, dass** die erste Materialkomponente (10-1) eine Chrom-Nickel-Legierung ist.

5. Magnetblech nach Anspruch 4, **dadurch gekennzeichnet, dass** die erste Materialkomponente (10-1) eine Eisen-Chrom-Legierung ist, mit einem Chromanteil, der zwischen 22 Gew. % und 28 Gew. %, insbesondere zwischen 24 Gew. % und 26 Gew. % beträgt.

6. Magnetblech nach Anspruch 4 oder 5, **dadurch gekennzeichnet, dass** die erste Materialkomponente (10-1) einen Nickelanteil aufweist, der zwischen 4 Gew. % und 10 Gew. %, insbesondere zwischen 6 Gew. % und 8 Gew. % beträgt.

7. Magnetblech nach einem der vorhergehenden Ansprüche, **dadurch gekennzeichnet, dass** mindestens eine Schicht (8-1, 8-2, 8-3 ... 8-n) einen Übergangsbereich (18) zwischen dem radial inneren Bereich (14) und dem radial äußeren Bereich (16) aufweist, in dem sowohl die erste Materialkomponente (10-1) und die zweite Materialkomponente (10-2) in diskreten Teilbereichen (20) vorliegen.

8. Magnetblech nach Anspruch 7, **dadurch gekennzeichnet, dass** eine untere Deckschicht (22-1) und eine obere Deckschicht (22-2) des Magnetblechs jeweils nur vom radial inneren Bereich (14) und vom radial äußeren Bereich (16) gebildet sind.

9. Magnetblech nach einem der vorhergehenden Ansprüche, **dadurch gekennzeichnet, dass** die einzelnen Schichten (8-1, 8-2, 8-3 ... 8-n) des Magnetblechs (2) unterschiedliche Schichtdicken (24) aufweisen.

10. Magnetblech nach einem der vorhergehenden Ansprüche, **dadurch gekennzeichnet, dass** einzelnen Schichten (8-1, 8-2, 8-3 ... 8-n) Schichtdicken (24) aufweisen, die zwischen 10 µm und 80 µm betragen.

11. Verfahren zur Herstellung eines rotationssymmetrischen Magnetblechs (2) für ein Blechpaket (4) einer elektrischen Maschine (6), umfassend folgende Schritte
a) Aufbringen einer ersten Druckpaste (26-1) mittels eines Schablonendruckverfahrens (28) auf ein Substrat (30) zur Ausbildung eines ersten Bereichs (34-1) einer ersten Schicht (32-1),
b) Aufbringen eines zweiten Bereichs (34-2) der ersten Schicht (32-1) auf das Substrat (30) unter Verwendung einer zweiten Druckpaste (26-2), so dass in der Schicht ein radial innen liegender Druckbereich (36) und ein radial außen liegender Druckbereich (38) ausgebildet werden
c) wiederholen der Schritte a) bis c) sodass mindestens drei Schichten (32-1, 32-2, 32-3, ...,32-n) entstehen, die einen Grünkörper (40) des Magnetblechs (2) bilden, wobei
d) die erste Druckpaste (26-1) und die zweite Druckpaste (26-2) unterschiedliche funktionale Material-Vorkomponenten umfassen und die funktionalen Material-Vorkomponenten beider Druckpasten Eisenpartikel in unterschiedlichen Legierungszusammensetzungen umfassen und
e) die Anordnung der Druckbereiche (34-1, 34-2) in den einzelnen Schichten (32-1, 32-2, 32-3, ...,32-n) so ausgestaltet ist, dass eine Symmetrie der Bereiche (34-1, 34-2) bezüglich einer Mittelebene (12), die parallel zum Substrat (30) durch die Mitte des Grünkörpers (40) verläuft, gegeben ist und die Materialanteile der Druckpasten zwischen den einzelnen Schichten variieren,
f) Durchführen eines Sinterprozesses (42) des Grünkörpers (40) zur Ausbildung des Magnetblechs (2), so dass radial innen liegende Druckbereiche (36) des Grünkörpers (40) zu eine Materialkomponente (10-1) auf Eisenbasis im Magnetblech (2) umgewandelt werden, die zumindest teilweise ein austenitisches Gefüge aufweisen.

12. Verfahren nach Anspruch 11, **dadurch gekennzeichnet, dass** neben dem radial innen liegenden Druckbereich (36) und den radial außen liegenden Druckbereichen (38) in mindestens zwei Schichten (32-1, 32-2, 32-3, ...,32-n) Übergangs-Druckbereiche erstellt werden, in denen sowohl die erste Material-Vorkomponente und die zweite Material-Vorkomponente in diskreten Teilbereichen (46) vorliegen.

13. Verfahren nach Anspruch 11 oder 12, **dadurch gekennzeichnet, dass** im Übergangsdruckbereich zumindest eine Materialkomponente durch ein druckfreies additives Fertigungsverfahren, insbesondere ein Sprühverfahren aufgebracht wird.

14. Blechpaket für einen Rotor (48) einer elektrischen Maschine (6) umfassend eine Mehrzahl von Magnetblechen (2) nach einem der Ansprüche 1 bis 10.

15. Elektrische Maschine umfassend ein Blechpaket (4) nach Anspruch 14.

## Claims

1. Screen-printed, rotationally symmetrical magnetic lamination (2) for a laminated core (4) of an electric machine (6), said magnetic lamination comprising at least three layers (8-1, 8-2, 8-3 ... 8-n) connected by sintering, wherein each layer (8-1, 8-2, 8-3 ... 8-n) contains at least two material components (10-1), (10-2) separate from one another in planar extent, **characterized in that**
- the arrangement of the material components (10-1), (10-2) in their planar extent in a respective layer (8-1, 8-2, 8-3 ... 8-n) is symmetrical with respect to a centre plane (12) of the magnetic lamination (2), wherein
- a ratio of material proportions of the first material component and of the second material component changes over the layer sequence and
- the first material component (10-1) is arranged in a radially inner region (14) of the respective layer (8-1, 8-2, 8-3 ... 8-n) and the second material component (10-2) is arranged in a radially outer region (16) of a respective layer (8-1, 8-2, 8-3 ... 8-n) and
- the first material component (10-1) comprises an iron alloy which has an austenitic microstructure in a proportion of up to at least 25% by volume.

2. Magnetic lamination according to Claim 1, **characterized in that** the second material component (10-2) comprises an iron alloy which comprises at least 95% by weight, in particular at least 97% by weight of iron.

3. Magnetic lamination according to Claim 2, **characterized in that** the second material component (10-2) has a ferritic or martensitic microstructure.

4. Magnetic lamination according to one of Claims 1 to 3, **characterized in that** the first material component (10-1) is a chromium-nickel alloy.

5. Magnetic lamination according to Claim 4, **characterized in that** the first material component (10-1) is an iron-chromium alloy which has a chromium proportion of between 22% by weight and 28% by weight, in particular between 24% by weight and 26% by weight.

6. Magnetic lamination according to Claim 4 or 5, **characterized in that** the first material component (10-1) has a nickel proportion of between 4% by weight and 10% by weight, in particular between 6% by weight and 8% by weight.

7. Magnetic lamination according to one of the preceding claims, **characterized in that** at least one layer (8-1, 8-2, 8-3 ... 8-n) has a transition region (18) between the radially inner region (14) and the radially outer region (16), said transition region containing both the first material component (10-1) and the second material component (10-2) in discrete sub-regions (20).

8. Magnetic lamination according to Claim 7, **characterized in that** a lower outer layer (22-1) and an upper outer layer (22-2) of the magnetic lamination are each formed only by the radially inner region (14) and by the radially outer region (16).

9. Magnetic lamination according to one of the preceding claims, **characterized in that** the individual layers (8-1, 8-2, 8-3 ... 8-n) of the magnetic lamination (2) have different layer thicknesses (24).

10. Magnetic lamination according to one of the preceding claims, **characterized in that** individual layers (8-1, 8-2, 8-3 ... 8-n) have layer thicknesses (24) of between 10 µm and 80 µm.

11. Method for producing a rotationally symmetrical magnetic lamination (2) for a laminated core (4) of an electric machine (6), comprising the following steps:
a) applying a first printing paste (26-1) by a screen printing method (28) to a substrate (30) to form a first region (34-1) of a first layer (32-1),
b) applying a second region (34-2) of the first layer (32-1) to the substrate (30) using a second printing paste (26-2), with the result that a radially inner print region (36) and a radially outer print region (38) are formed in the layer,
c) repeating steps a) to c), with the result that at least three layers (32-1, 32-2, 32-3, ..., 32-n) that form a green body (40) of the magnetic lamination (2) are produced, wherein
d) the first printing paste (26-1) and the second printing paste (26-2) comprise different functional material starting components and the functional material starting components of the two printing pastes comprise iron particles in different alloy compositions and
e) the arrangement of the print regions (34-1, 34-2) in the individual layers (32-1, 32-2, 32-3, ..., 32-n) is configured such that there is a symmetry of the regions (34-1, 34-2) with respect to a centre plane (12), which runs parallel to the substrate (30) through the middle of the green body (40), and the material proportions of the printing pastes vary between the individual layers,
f) carrying out a sintering process (42) on the green body (40) to form the magnetic lamination (2), with the result that radially inner print regions (36) of the green body (40) which at least partially have an austenitic microstructure are converted into an iron-based material component (10-1) in the magnetic lamination (2).

12. Method according to Claim 11, **characterized in that**, in addition to the radially inner print region (36) and the radially outer print regions (38), transition print regions containing both the first material starting component and the second material starting component in discrete subregions (46) are created in at least two layers (32-1, 32-2, 32-3, ..., 32-n).

13. Method according to Claim 11 or 12, **characterized in that** at least one material component is applied in the transition print region by a printing-free additive manufacturing method, in particular a spraying method.

14. Laminated core for a rotor (48) of an electric machine (6), comprising a plurality of magnetic laminations (2) according to one of Claims 1 to 10.

15. Electric machine comprising a laminated core (4) according to Claim 14.

## Revendications

1. Tôle (2) magnétique de révolution imprimée au pochoir, pour un paquet (4) de tôles d'une machine (6) électrique, qui comprend au moins trois couches (8-1, 8-2, 8-3, ..., 8-n) reliées par frittage, dans laquelle il y a, dans chaque couche (8-1, 8-2, 8-3, ..., 8-n), au moins deux composants (10-1), (10-2) de matériau séparés l'un de l'autre dans une étendue plane,
**caractérisée en ce que**
- l'agencement des composants (10-1), (10-2) de matériau est, dans son étendue plane, dans une couche (8-1, 8-2, 8-3, ..., 8-n) respective, symétrique par rapport à un plan (12) médian de la tôle (2) magnétique, dans lequel
- un rapport des proportions de matériau du premier composant de matériau et du deuxième composant de matériau se modifie sur la succession de couches, et
- le premier composant (10-1) de matériau est disposé dans une partie (14) intérieure radialement de la couche (8-1, 8-2, 8-3, ..., 8-n) respective et le deuxième composant (10-2) de matériau est disposé dans une partie (16) extérieure radialement d'une couche (8-1, 8-2, 8-3, ..., 8-n) respective, et
- le premier composant (10-1) de matériau comprend un alliage de fer, qui a, pour au moins 25 % en volume, une texture austénitique.

2. Tôle magnétique suivant la revendication 1, **caractérisée en ce que** le deuxième composant (10-2) de matériau comprend un alliage de fer, qui comprend au moins 95 % en poids, en particulier au moins 97 % en poids de fer.

3. Tôle magnétique suivant la revendication 2, **caractérisée en ce que** le deuxième composant (10-2) de matériau a une structure de texture ferritique ou martensitique.

4. Tôle magnétique suivant l'une des revendications 1 à 3, **caractérisée en ce que** le premier composant (10-1) de matériau est un alliage de chrome et de nickel.

5. Tôle magnétique suivant la revendication 4, **caractérisée en ce que** le premier composant (10-1) de matériau est un alliage de fer et de chrome avec une proportion de chrome, qui est comprise entre 22 % en poids et 28 % en poids, en particulier entre 24 % en poids et 26 % en poids.

6. Tôle magnétique suivant la revendication 4 ou 5, **caractérisée en ce que** le premier composant (10-1) de matériau a une proportion de nickel, qui est comprise entre 4 % en poids et 10 % en poids, entre particulier entre 6 % en poids et 8 % en poids.

7. Tôle magnétique suivant l'une des revendications précédentes, **caractérisée en ce qu'**au moins une couche (8-1, 8-2, 8-3, ..., 8-n) a une partie (18) de transition, entre la partie (14) intérieure radialement et la partie (16) extérieure radialement, dans laquelle tant le premier composant (10-1) de matériau que le deuxième composant (10-2) de matériau sont présents dans des parties (20) partielles discrètes.

8. Tôle magnétique suivant la revendication 7, **caractérisée en ce qu'**une couche (22-1) de finition inférieure et une couche (22-2) de finition supérieure de la tôle magnétique sont formées respectivement seulement par la partie (14) intérieure radialement et par la partie (16) extérieure radialement.

9. Tôle magnétique suivant l'une des revendications précédentes, **caractérisée en ce que** les diverses couches (8-1, 8-2, 8-3, ..., 8-n) de la tôle (2) magnétique ont des épaisseurs (24) de couches différentes.

10. Tôle magnétique suivant l'une des revendications précédentes, **caractérisée en ce que** diverses couches (8-1, 8-2, 8-3, ..., 8-n) ont des épaisseurs (24) de couche, qui sont comprises entre 10 µm et 80 µm.

11. Procédé de fabrication d'une tôle (2) magnétique de révolution pour un paquet (4) de tôles d'une machine (6) électrique, comprennent les stades suivants :
a) dépôt d'une première pâte (26-1) d'impression au moyen d'un procédé (28) d'impression au pochoir sur un substrat (30) pour la constitution d'une première partie (34-1) d'une première couche (32-1),
b) dépôt d'une deuxième partie (34-2) de la première couche (32-1) sur le substrat (30) en utilisant une deuxième pâte (26-2) d'impression de manière à former, dans la couche, une partie (36) d'impression se trouvant à l'intérieur radialement et une partie (38) d'impression se trouvant à l'extérieur radialement,
c) répétition des stades a) à c) de manière à créer au moins trois couches (32-1, 32-2, 32-3, ..., 32-n), qui forment un corps (40) de base de la tôle (2) magnétique, dans lequel
d) la première pâte (26-1) d'impression et la deuxième pâte (26-2) d'impression comprennent des précurseurs de matériau fonctionnels différents, et les précurseurs de matériau fonctionnels des deux pâtes d'impression comprennent des particules de fer en des compositions d'alliage différentes, et
e) l'agencement des parties (34-1, 34-2) d'impression dans les diverses couches (32-1, 32-2, 32-3, ..., 32-n) est conformé de manière à obtenir une symétrie des parties (34-1, 34-2) par rapport à un plan (12) médian, qui s'étend parallèlement au substrat (30) en passant par le milieu du corps (40) de base et les proportions de matériau des pâtes d'impression varient entre les diverses couches,
f) exécution d'une opération (42) de frittage du corps (40) de base pour la formation de la tôle (2) magnétique, de manière à transformer des parties (36) d'impression du corps (40) de base se trouvant à l'intérieur radialement en un composant (10-1) de matériau à base de fer dans la tôle (2) magnétique, lesquelles parties ont au moins en partie une texture austénitique.

12. Procédé suivant la revendication 11, **caractérisé en ce que**, à côté de la partie (36) d'impression se trouvant à l'intérieur radialement et des parties (38) d'impression se trouvant à l'extérieur radialement, on établit, dans au moins deux couches (32-1, 32-2, 32-3, ..., 32-n), des parties d'impression de transition, dans lesquelles tant le premier précurseur de matériau que le deuxième précurseur de matériau sont présents en des parties (46) partielles discrètes.

13. Procédé suivant la revendication 11 ou 12, **caractérisé en ce que**, dans la partie d'impression de transition, on dépose au moins un composant de matériau par un procédé de fabrication additif sans impression, en particulier par un procédé de projection.

14. Paquet de tôles d'un rotor (48) d'une machine (6) électrique comprenant une pluralité de tôles (2) magnétiques suivant l'une des revendications 1 à 10.

15. Machine électrique comprenant un paquet (4) de tôles suivant la revendication 14.
